# EUROPEAN PATENT SPECIFICATION

(11) **EP 2 626 668 B1**
(45) Date of publication and mention of the grant of the patent: **30.11.2016**
(21) Application number: 12154741.8
(22) Date of filing: 09.02.2012
(51) Int. Cl.: G06F 17/30, G01C 21/32

(54) **Testing of a map database update**
Prüfung einer Kartendatenbankaktualisierung
Test de mise à jour de bases de données cartographiques

(43) Date of publication of application: 14.08.2013
(73) Proprietor: HERE Global B.V., 5611 ZT Eindhoven (NL)
(72) Inventor: Richter, Jan, 65510 Idstein (DE); Pfeifle, Martin, 72297 Seewald (DE)
(74) Representative: Potter Clarkson LLP

(56) References cited:
- EP-A2- 1 643 395
- JP-A- 2006 275 856
- US-A- 5 893 113
- MAXIME FLAMENT ET AL: 'Programme Name: Nature of the Deliverable: RE-Report Author(s)', [Online] 24 June 2005, XP055181222 Retrieved from the Internet: <URL:http://www.transport-research.info/Upl oad/Documents/201007/20100726_152452_50550_ ActMAP-final report.pdf> [retrieved on 2015-04-07]

## Description

### BACKGROUND

The present embodiments generally relate to testing of incrementally updated geographic map related databases.

Map databases are used in computer-based systems that provide useful features to users. For example, navigation systems or devices provide useful features, including the identification of routes to destinations or points of interests. A navigation system determines the optimum route to be taken by the end user to travel from the origin to the destination location from map data stored in a geographic (or map) database. Map databases are also used in advanced driver assistance systems ("ADAS"), such as curve warning systems, adaptive cruise control systems and headlight aiming systems. Map databases are also used in systems that improve vehicle fuel economy, such as systems that optimize transmission gear selection taking into account upcoming slope and speed changes.

As new roads are built, other roads are closed, or locations of business are changed, the geographic database is updated. One way to update map data is to replace the entire existing map database with a new version of the geographic database containing new, updated map data.

However, a replacement of the entire map database is a relatively expensive and time consuming process and may be unnecessary considering that much of the map data may not be changed from the old version to the new version. Partial updates or incremental updates of the map data are possible but introduce the risk that a partial update will introduce inconsistencies between the new and old data.
JP2006275856A describes a technology suitable for a navigation device 20 wherein a storage device such as a hard disc device is loaded on a vehicle. Updating data of map data are stored in a map data storage part 201 together with error check information (for example, check sum) of the updating data and are verified by using the error check information, and only when an error is not detected, the updating data are utilized in map display of the navigation device 20.
EP1643395A2 describes a method for operating a navigation system that executes a navigation application software program to provide a navigation-related feature. The method comprises identifying that the navigation application software program uses both updated geographic data and un-updated geographic data from a geographic database associated with said navigation system. The un-updated geographic data has an associated date or version different from the updated geographic data. The method further comprises providing a report indicating that an inconsistency between the updated geographic data and the un-updated geographic data may exist. The method may further include identifying the inconsistency between the updated geographic data and the un-updated geographic data.
Maxime Flament ET AL: "ActMAP Final Report", 24 June 2005 (2005-06-24), XP055181222, Retrieved from the Internet: URL:http://www.transport-research.info/Upload/Documents/201007/20100726 152452_50550_ActMAP-final_report.pdf [retrieved on 2015-04-07] presents an overview of the results of the ActMAP project. It is a consolidated report on the requirements, specifications, implementation and validation of the ActMAP framework. A section on methodology and problems encountered is also included.

### SUMMARY

A partial update or an incremental update of a map database is designed to be installed on particular prior version of the map database. If the incremental update includes inconsistencies with the data in the prior version, the system in which it is installed may not function properly.

These problems are alleviated by the disclosed method of testing the updated map database. A component of a navigation system receives a list of recompiled objects derived from an update package for updating the navigational database, populates a table with map tiles associated with the recompiled objects, generates a test script including a consistency check algorithm for at least one of the map tiles, and stores the test script in a memory. The component of the navigation system may be a map developer server or a navigation device.

The present invention comprises an apparatus, method and computer readable medium as defined by claims 1, 12 and 13, respectively, and nothing in this section should be taken as a limitation on those claims. Further aspects and advantages of the invention are discussed below in conjunction with the preferred embodiments.

### BRIEF DESCRIPTION OF THE DRAWINGS

Figure 1A illustrates an example embodiment for delivering a combined update and test package to a navigation device.
Figure 1B illustrates an example embodiment for generating a test package at a navigation device.
Figure 1C illustrates an example embodiment for generating a test package at a third party.
Figure 2 illustrates an example navigation system including a navigation device and a map developer.
Figure 3 illustrates a block diagram of the map developer of Figure 2.
Figure 4 illustrates a block diagram of the navigation device of Figure 2.
Figure 5 illustrates an example embodiment of an algorithm for testing an incrementally updated map database.

### DETAILED DESCRIPTION

A geographic database may be updated by replacing all of the map data with a new version. This method may consistently result in a functioning updated geographic database. However, a complete replacement is relatively time consuming and expensive. An incremental update for a geographic database replaces only a portion of a previous version of the database with updated data, while leaving the rest of the database unchanged. In one approach, the incremental update identifies database elements which may include adding new data, removing data, and altering data. Incremental updates reduce the time and costs of an update. However, there exist a risk that partially updating a database may introduce inconsistencies between the old and new data that might cause the system to malfunction or operate improperly.

Standardization of map databases across multiple vendors may result in less control over consistency. An update with inconsistencies may result in a database that includes references to or from objects that do not exist, which may cause incorrect operation. To avoid these risks, the incremental update may be performed along with incremental testing.

A navigation system utilizes a testing procedure embodied in a test package, which is made for a particular updating procedure embodied in an update package. The test package may be combined with an update package. The testing procedure allows the update to be tested before the update is committed to the map database. A test function checks the validity of references in the map database associated with only the updated portions of the map. The testing procedure may require only seconds, as compared to hours for testing of complete (continental) databases. The navigation system analyzes the result of the test function to determine whether to finalize or roll back the update.

For the purposes of discussion, the data of the map database is described in terms of map tiles and objects. A map tile, which may be referred to as a database file or a database entry, includes a list of objects and a tile identification value. An object may be a graphical representation of a real world feature included in the map tile. Objects may include segments, links, nodes, edges, faces, and names. The objects may be organized in layers. The objects may be further described by characteristics. Characteristics may include turn restrictions, addresses, signs, speed limits, or any other supplementary information.

A map tile may include data organized in binary large objects (BLOBS), which is a set of binary data stored as a single entity. The map tile corresponds to a square or other shape on the earth representing the data of a certain region. The map tiles may be defined using a map scale value. A BLOB is stored in a relational database. The relational database may be structured in tables of rows and columns. The BLOBS may be organized into rows in the relational database.

Formats such as the physical storage format (PSF) proposed by the Navigation Data Standard (NDS) initiative may be used for the map database. Alternatively, any geographic information format may be used, including generic or proprietary formats. The geographical database may include node and link information. A link is bound on either end by a node. A node may be an intersection, the end of a road, or a change in a road. Each node is a location on the surface of the Earth and may be represented by a longitude coordinate and a latitude coordinate. The link may be a stretch of road or pathway. Other terminologies may be used to describe the map data.

The following embodiments provide example implementations of testing an incrementally updated map database. Other embodiments are possible.

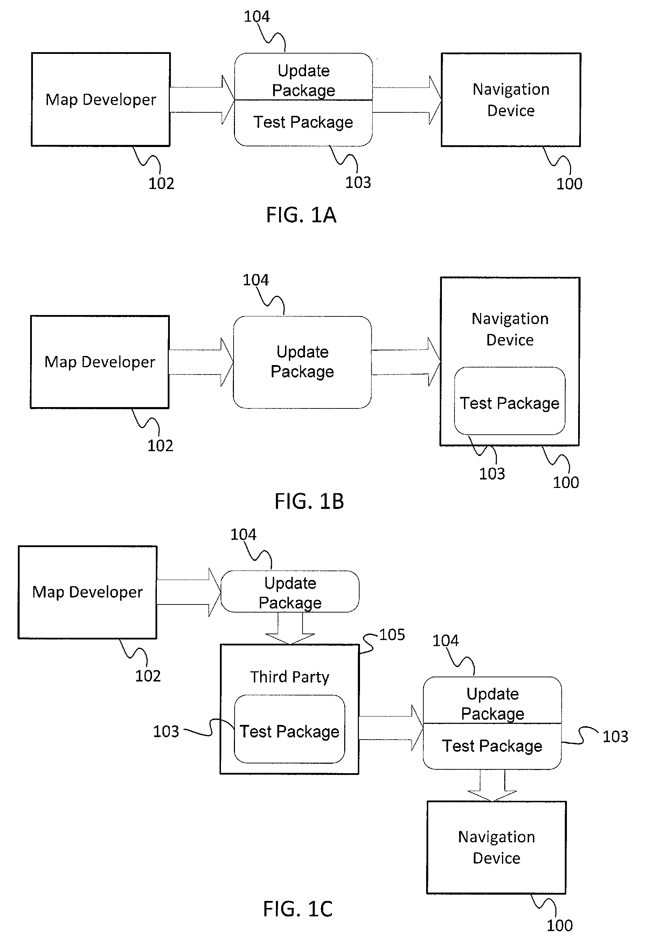

Figure 1A illustrates a first embodiment of a navigation system. The navigation system includes a map developer 102 and a navigation device 100. The map developer 102 may be any entity for producing and/or maintaining geographic data such as NAVTEC1 North America, LLC located in Chicago, Illinois. The map developer 102 may distribute an original or other version of the map database to one or more navigation devices. Alternatively, the map developer 102 may distribute a version of the map database in an intermediate (or interchange) format (such as the GDF format) to one or more other entities, such as navigation system manufacturers ("system vendors"), original equipment manufacturers ("OEMs"), or other entities, which compile the map database from the intermediate format into a compiled format (such as the NDS format) suitable for installation and use in the navigation device 100. The map developer 102 may continue to collect map data for new geographic areas or for changes that are made to geographic areas already included in the original version. The map developer 102 (or intermediate entity) generates an update package 104 (e.g. patch) to incrementally update the map database to include the new geographic areas or updates.

The update package 104 may include a subset of the map data of the map database less than the entire map database. The update package 104 may include an updated map tile or recompiled map tile for each map tile to be updated. Alternatively, the update package 104 may include updated object information rather than an updated tile (i.e., only a portion of a given tile is updated). The update package 104 may be for any number of objects, nodes, links, tiles, characteristics, or other data division. The update package 104 may be for updating or replacing a large amount (e.g., 50% or more) of the database or a small amount (e.g., update one or more of thousands or millions of records).

An update application on the navigation device 100 incorporates the update package 104 into the original map database. In one implementation, the update package 104 includes instructions for the update application to incorporate the update package 104 into the original map database or other version of the map database.

The incremental update instructions for a map database are stated in terms of a known dataset. The incremental update instructions contain a reference to a database tile and a description of an alteration to the tile. The incremental updates may be a transaction that contains an ordered set of steps of adding, changing, and/or deleting objects and/or characteristics in the map database.

The map developer 102 may also generate a test package 103. The test package 103 may be combined with the update package 104. The test package 103 includes a test script for testing the incrementally updated update package 104. The test script may include a test command (test function) for each of the recompiled map tiles of the update package 104. The test script may be derived from a list of objects or a list of recompiled map tiles used to create the update package 104. In this way, a test script is generated for each update package. The test script is executed by a test application on the navigation device 100. As shown in Figure 1A, the map developer 102 may generate the test package 103 and the update package 104, combine the test package 103 and the update package 104, and deliver the test package 103 and the update package 104 to the navigation device 100. The test package 103 and update package 104 may be delivered separately. The test package 103 may be an application operated independently of the map developer 102 and/or independently of the specific update package 104. For example, the test package 103 may be a program for testing use of any tile. The updated tiles are identified from the update package 104 and tested.

Figure 1B illustrates a second embodiment of a navigation system. In Figure 1B, the map developer 102 generates the update package 104 and communicates the update package 104 to the navigation device 100. The update package 104 includes a list of objects or a list of recompiled map tiles. The navigation device 100 includes a test application configured to generate the test package 103 from the list of recompiled map tiles.

Figure 1C illustrates a third embodiment of a navigation system. In Figure 1C, the map developer 102 generates the update package 104 and communicates it to a third party device 105. The third party device 105 generates the test package 103 from a list of recompiled map tiles or a list of updated objects. The third party device 105 may be a computer configured to communicate with the navigation device 100. The third party device 105 may be implemented using cloud computing or through another system via the Internet. The third party device 105 communicates the update package 104 and the test package 103 to the navigation device 100.

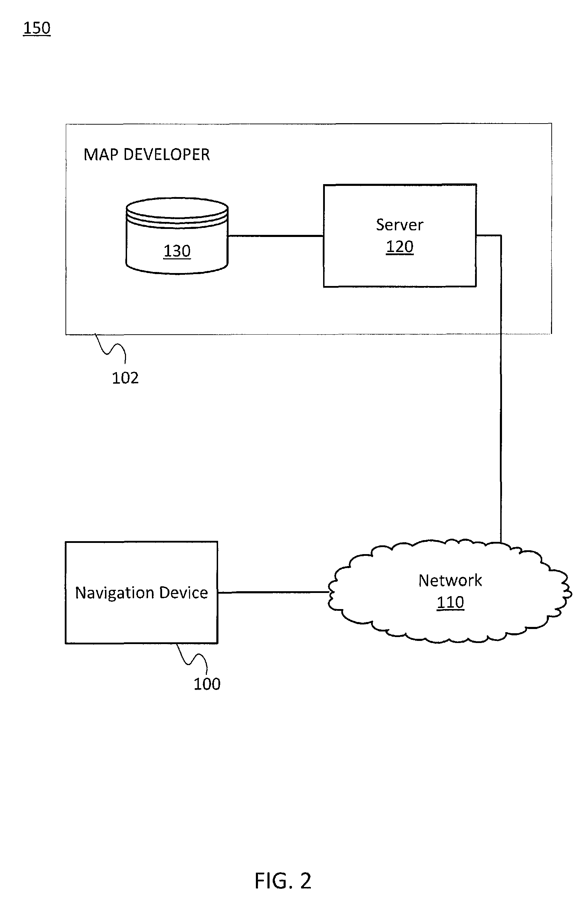

Figure 2 illustrates a navigation system 150 including a navigation device 100 and a map developer 102. The navigation device 100 may be a cellular telephone, a mobile phone, a smart phone, a personal digital assistant ("PDA"), a camera, a tablet computer, a laptop, a personal navigation device ("PND"), or any portable navigation device. The navigation device 100 may be mounted in an automobile as a head unit or incorporated into an audio system. Alternatively, the navigation device 100 is a server, database, or processor for providing navigation map data as needed by other devices. The navigation device 100 includes a network interface for wireless or wired connection to the network 110. The map developer 102 includes at least a map database 130 and a server 120. The map database 130 includes map data and other data for navigation-related services.

The map developer 102 communicates the update package 103 or the combination of the update package 103 and test package 104 to the navigation device 100 by way of the network 110. The network 110 and the communication paths between the map developer 102 and the network 110 may be any protocol or physical connection that is used to couple a server to the navigation device 100. The communication paths may utilize cellular (e.g. 3G, 4G, or WiMAX), Ethernet, wireless, or any Internet protocol technologies. Alternatively, the network 110 may be a private network that may not be connected to the Internet, a peer to peer network, or an ad-hoc network, such as a mobile mesh network including mobile devices and wireless links. In other embodiments, the navigation device 100 is connected through a wire, such as USB cable, to the network 110.

Alternatively, the network 110 may be omitted. For example, the map developer 102 may communicate the update package 103 or the combination of the update package 103 and test package 104 to the navigation device 100 by way of a storage medium. The storage medium may be a flash memory, a memory card, a compact disc, or a diskette. The storage medium may store the update package 103 or the combination of the update package 103 and test package 104 and be distributed from the map developer 102 to the end user and connected to the navigation device 100.

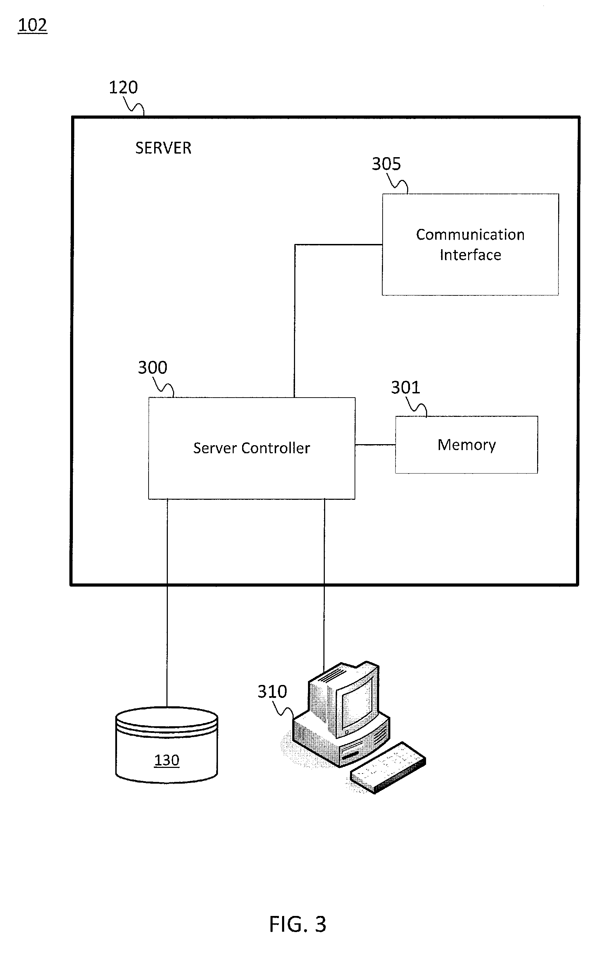

Figure 3 illustrates a block diagram of the map developer 102 of Figure 2. In addition to the map database 130 and the map developer server 120, the map developer 102 may include a workstation 310. The map developer server 120 may include a server controller 300, a memory 301, and a communication interface 305. Additional, different, or fewer components may be used.

The map developer 102 may be configured to generate the update package 104. The update package 104 may include update instructions. The update instructions may be a plurality of update commands using structured query language (SQL) or another language, such as Java or C++.

An example update command may be expressed as *"UPDATE routingTileTable SET RouringTile=NEWRoutingTile WHERE RoutingTile=4711".* The update instructions may include a few to thousands or more update commands. The update commands may specify map tiles, objects, or characteristics that are being changed by the incremental update. However, the update commands may also affect other tiles, objects, or characteristics. For example, if a link (e.g. a road) in one map tile is added adjacent map tiles that reference into this tile may also require updating. The map database may be updated from a first version of geographic data to a second version of geographic data, such that a first map tile in the first version of geographic data remains in the second version of geographic data and a second map tile from the first version of geographic data is changed in the second version of geographic data.

The map developer 102 has access to a list of recompiled objects or map tiles. The list may be generated at the map developer 102 as part of the generation of the update package 104. Alternatively, the list of recompiled objects or map tiles may be received from an external source or constructed from an analysis of the update package 104. The list of recompiled objects may specify a list of map tiles by name (e.g. RoutingTile=4711 or RoutingTile=[4711, 3943, 2321]).

The server controller 300 is configured to receive the list of recompiled objects and populate a table with map tiles associated with the recompiled objects. The server controller 300 is also configured to generate a test script from the list of recompiled objects. The test script is designed to check whether all reference to and from each of the recompiled objects are valid based on the data contained in the update package 104. As an alternative to automated test script generation, a programmer may create and upload the test package to the server controller 300 or memory 301.

The test script is made up of a plurality of test cases. The test cases may be consistency check algorithms expressed in SQL or by another method. A test case may be applied to only a part of the map database 130 by using the "where" qualifier in SQL or by other restrictions. For example, consider a map database including the table *"routing (tilelD, tileData)"* using a consistency check algorithm stored as *"CheckConsistency".* In this scenario, a test command may be *"SELECT tilelD FROM routing WHERE CheckConsistency(TileData)=-1 and Tiled=4711".* The test script may include a test command for each of the updated map tiles or updated objects in the list. The consistency check algorithm determines whether references in the map database 130 to the at least one of the map tiles and from the at least one of the map tiles are valid.

As shown in the test command above, the return value for an error may be -1. Alternatively, the return value for an error may be another value or the function may return the tile identification value (tileID) of the map tile containing the error. When the test command is executed on the map database 130 and the test command does not return any records, the map tile 4711 of update package 104 has passed the test. The results of the test may be communicated back to the server controller 300, which is configured to analyze the result of the test command and identify the test script as either no errors, fatal errors, or minor errors.

Alternatively, the test command may specify a plurality of updated objects or map tiles. For example, the update package 104 may include the list of updated objects or map tiles as *routingTilesToCheck.* The list of updated map tiles may be indexed in a table by TileID. A test command may be *"SELECT tileID FROM routing WHERE CheckConsistency(TileData)=-1 and TilelD in (SELECT TilelD FROM routingTilesToCheck)".* The test command may return the map tiles or objects that have failed the test. The test command requires much less processing resources and time than a test on the complete map database 130.

As another implementation alternative to SQL, the test package 103, or the combined test package 103 and update package 104 may be hard coded as a dedicated software package distributed by the map developer 101. The dedicated software internally provides the return value and decides whether to commit or reject the update package 104. The dedicated software package may be written in Java, C++, Visual Basic, or another language. Further, the dedicated software package may be a dynamic link library (DLL).

As discussed above, a table of map tiles or objects associated with the update package 104 may be populated by the map developer server 120 to create the test package 103. The test package 103 may be executed on the updated database using the update package at the map developer 101 (before the update package 104 is offered to the end user). The database may be a specified baseline version of the map database 130, or a set of possible baseline versions of the map database 130. Alternatively, the combined update package 104 and test package 103 are provided to the navigation device 100. The navigation device 100 executes the update package 104 and subsequently executes the test package 103 in succession or executes both as a single transaction. In yet another alternative, the map developer server 120 may generate only the update package 104 and the navigation device 100 may generate the test package 103.

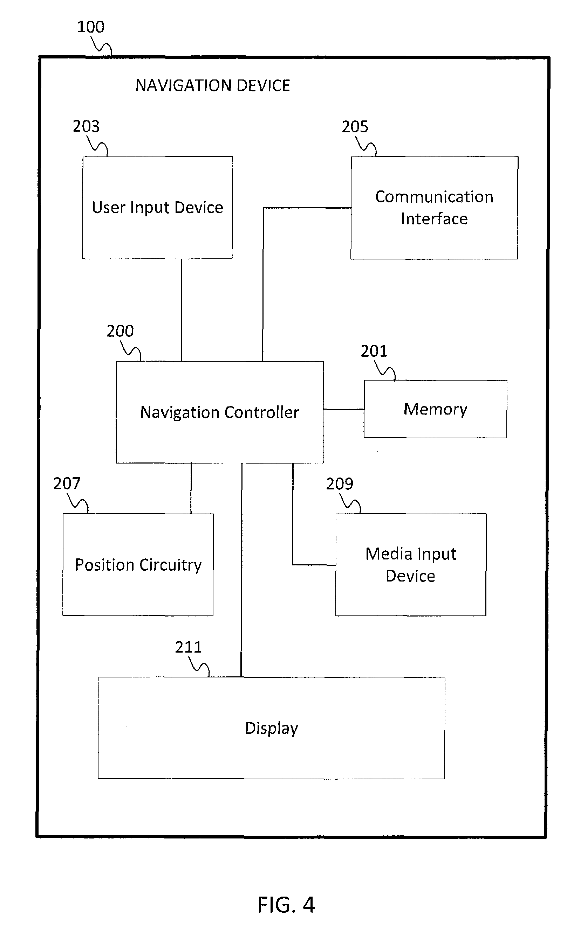

Figure 4 illustrates a block diagram of the navigation device 100 of Figure 3. The navigation device 100 includes a navigation controller 200, a memory 201, a user input device 203, a communication interface 205, position circuitry 207, a media input device 209, and a display 211. Additional, different, or fewer components may be provided.

The navigation controller 200 may include a general processor configured to execute instructions for incrementally updating and testing the map database 130. The navigation controller 200 receives the list of map tiles or recompiled objects from the map developer 102 by way of communication interface 205. The navigation controller 200 populates a table with the map tiles associated with the recompiled objects.

The memory 201 stores a test script including a consistency check algorithm for at least one of the map tiles. For example, the test script may include a plurality of test commands. Each of the test commands calls the table of map tiles for a specific updated tile and checks all of the references made from the updated tile or to the update tile. The updated tile is considered valid when each of the references made in the map tile point to existing map tiles or existing objects.

The navigation controller 200 receives a return value from the test script. The return value may indicate that the update package 104 passes the test or that there were errors. The return value may include the tile identification value of one or more map tiles containing errors. If the return value indicates that there were no errors, the navigation controller 200 may finalize the update package 104. If the return value indicates that the number of errors exceeds a threshold value (e.g., 1, 5, or 10 errors), the navigation controller 200 may roll back the update package 104 such that the map database 130 reverts to the original or previous version.

The navigation controller 200 may log the return value in an error report stored in memory 201. The error report may be presented to the user or communicated to the map developer 102. The navigation device 100 may give the user the option of committing the update package 104 or removing the update package based on the error report. The user may enter a command to keep or reject the update package 104 by way of the user input device 203.

The user input device 203 includes one or more buttons, keypad, keyboard, mouse, stylist pen, trackball, rocker switch, touch pad, voice recognition circuit, or other device or component for inputting data to the navigation device 100. The user input device 203 and the display 211 may be combined as a touch screen, which may be capacitive or resistive. The display 211 may be a liquid crystal display (LCD) panel, light emitting diode (LED) screen, thin film transistor screen, or another type of display. The user input device 203 may be configured to permit the user to reject all or accept all updates and to enable or disable the testing feature.

The navigation controller 200 may include a general processor, digital signal processor, an application specific integrated circuit (ASIC), field programmable gate array, analog circuit, digital circuit, combinations thereof, or other now known or later developed processor. The navigation controller 200 may be a single device or combinations of devices, such as associated with a network, distributed processing, or cloud computing.

The memory 201 may be a volatile memory or a non-volatile memory. The memory 201 may include one or more of a read only memory (ROM), random access memory (RAM), a flash memory, an electronic erasable program read only memory (EEPROM), or other type of memory. The memory 201 may be removable from the navigation device 100, such as a secure digital (SD) memory card. The memory 201 is configured to store the test script including the consistency check algorithm for at least one of the map tiles.

The communication interface 205 may include any operable connection. An operable connection may be one in which signals, physical communications, and/or logical communications may be sent and/or received. An operable connection may include a physical interface, an electrical interface, and/or a data interface. The communication interface 205 provides for wireless and/or wired communications in any now known or later developed format.

The position circuitry 207 may include one or more of a variety of global navigation satellite systems such as Global Positioning System (GPS), the Russian GLONASS or European Galileo. The navigation satellite system may be supplemented, or in some implementations replaced by alternative location systems such as triangulation and/or relative position sensors. In triangulation, the position circuitry 207 includes a signal strength sensor or an array of signal strength sensors configured to measure the signal level from two or more antenna. The navigation controller 200 calculates the position of the navigation device 100 from the signal strength measurements. Triangulation may be used in cellular networks, Bluetooth, or in wireless LAN and wireless mesh, as described in the IEEE 802.11 family of standards.

The position circuitry 207 may also include relative position sensors in an inertial position system or dead reckoning system. Relative positions sensors include but are not limited to magnetic sensors (e.g., magnetometers, compasses), accelerometers, gyroscopes, and altimeters. Magnetic sensors determine the direction and or strength of a magnetic field and can be used to determine heading or orientation. Inertial sensors such as accelerometers and gyroscopes measure acceleration, which can be used to calculate position, orientation, and velocity (direction and speed of movement) of the navigation device 100.

The media input device 209 may include a memory card interface, a universal serial bus (USB) interface, or a disk drive. The media input device 209 may receive the update package 104 and/or the test package 103. For example, the map developer 102 may store the update package 104 and/or the test package 103 on a compact disk, memory card, or other storage medium that interfaces directly with the media input device 209. Alternatively, the third party device 105 may be a laptop or other computing device that receive the update package 104 and/or the test package 103 from the map developer and delivers the update package 104 and/or the test package 103 to the media input device 209.

The map database 130 may be a memory, hard drive, flash drive, or any storage device. Further, various implementations of the server controller 300, the memory 301, and the communication interface 305 may be made in the manner discussed above with respect to the navigation controller 200, the memory 201, and the communication interface 205, respectively.

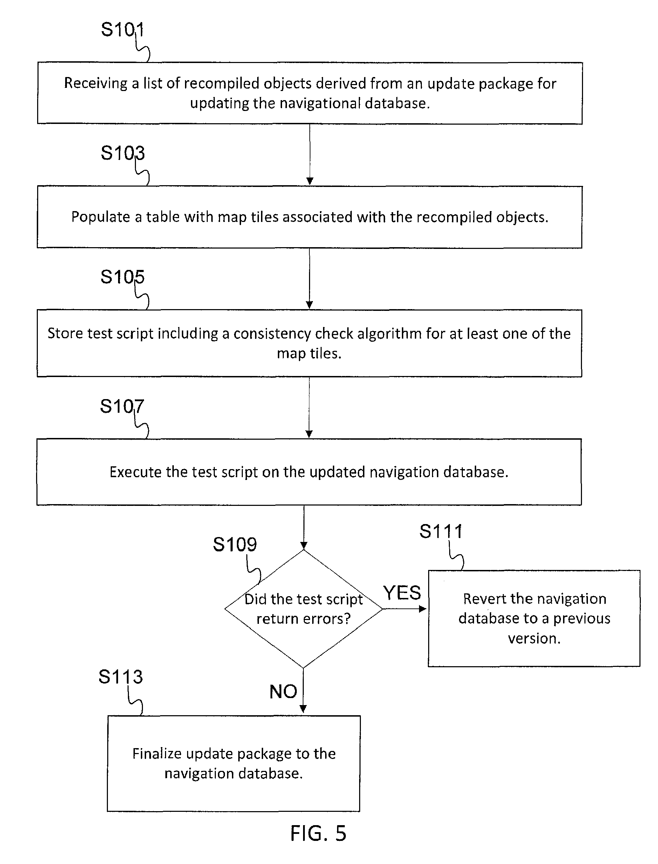

Figure 5 illustrates an example embodiment of an algorithm for testing the incrementally updated map database 130. The testing package 103 may be generated by the map developer 102, the navigation device 100, or a third party device 105. The testing package 103 may be generated before, after, or concurrent to the execution of the update package 104. For example, the map developer 102 may generate the test package 103 before the navigation device 100 executes the update package 104 so that the test package 103 and the update package may be stored together. In addition, the navigation device 100 may generate the test package 103 before, during, or after the update package 104 is installed on the navigation device 100. Regardless of when the update occurs, a list of objects or map tiles may be derived from the update package 104. Either the map developer 102 or the navigation device 100 may derive the list.

The algorithm for testing the map database 130, as shown in Figure 5 may be performed by either the map developer 102 or the navigation device 100. The following discussion of the algorithm applies to either scenario and the term controller refers alternatively to the server controller 300 or the navigation controller 200 and the term memory refers alternatively to the respective memory 301 or memory 201.

At act S101, the list of recompiled objects, tiles, or characteristics derived from the update package 104 are received at the controller. The list of recompiled objects may be a list of map tiles (e.g., an array of map tile values) or a list of links or nodes. At act S103, the controller populates a table with the map tiles. In the case that the list of recompiled objects includes links or nodes, the controller populates the table with the map tiles that include any of the links or nodes.

The controller generates a test script including a consistency check algorithm for at least one of the map tiles. The consistency check algorithm may be written in SQL logic. For example, the test script may define the table as *"routingTilesToCheck"* by TileID and a test command as *"SELECT tileID FROM routing WHERE CheckConsistency(TileData)=-1 and TilelD in (SELECT TilelD FROM routingTilesToCheck)".* The CheckConsistency function determines whether references within each of the plurality of map tiles are valid, whether references to each of the plurality of map tiles are valid, or both. At act S105, the memory stores the test script including the consistency check algorithm.

At act S107, the controller executes the test script on the updated map database 130. The test command may return -1 in the case of one or more errors. The test command may return the number of errors or an array of the map tiles or objects that have failed the test. At act S109, the controller determines whether the test script returned errors. If the test script returned errors, the controller removes the update package 104 or otherwise reverts the map database 130 to a previous version, at act S111. If the test script did not return errors, the controller finalizes or commits the update package 104 to the map database 130.

The controller may be configured to analyze the errors and characterize the errors as harmless, non-critical, or critical. The memory is configured to store a threshold value for the total number of errors or a threshold value for the number of critical errors. At act S109, the controller determines whether the number of errors exceeds the threshold value or the number of critical errors exceeds the threshold value. Different types of errors may have different thresholds. For example, a single critical error may be sufficient to roll back the update. At act S113, the controller approves the update package 104 if the actual number of errors is less than the threshold value. The threshold value may be 1, 10, 100, or any number and may be specified by the user using the user input device 203.

In this way, the algorithm for testing the incrementally updated map database 130 prevents an incremental update to the map database 130 from making the map database 130 inoperable or faulty. If any of the references from or to the updated routing data are found to be invalid, the incremental update is rolled back. Accordingly, incremental updates to the map database 130 are more secure and reliable.

The embodiments described above may be implemented using computer executable instructions stored in the memory 201 and/or the memory 301, which are non-transitory. The processors may execute computer executable instructions. The computer executable instructions may be written in any computer language, such as C++, C#, Java, Pascal, Visual Basic, Perl, HyperText Markup Language (HTML), JavaScript, assembly language, extensible markup language (XML) and any combination thereof.

The computer executable instructions may be logic encoded in one or more tangible media or one or more non-transitory tangible media for execution by the processors. Logic encoded in one or more tangible media for execution may be defined as instructions that are executable by the processors and that are provided on the computer-readable storage media, memories, or a combination thereof. Instructions for instructing a network device may be stored on any logic. As used herein, "logic", includes but is not limited to hardware, firmware, software in execution on a machine, and/or combinations of each to perform a function(s) or an action(s), and/or to cause a function or action from another logic, method, and/or system. Logic may include, for example, a software controlled microprocessor, an ASIC, an analog circuit, a digital circuit, a programmed logic device, and a memory device containing instructions.

The computer readable instructions may be stored on any non-transitory computer readable medium. A non-transitory computer readable medium may include, but are not limited to, a floppy disk, a hard disk, an ASIC, a compact disk, other optical medium, a random access memory (RAM), a read only memory (ROM), a memory chip or card, a memory stick, and other media from which a computer, a processor or other electronic device can read.

As used herein, the phrases "in communication" and "couple" are defined to mean directly connected to or indirectly connected through one or more intermediate components. Such intermediate components may include both hardware and software based components.

Various embodiments described herein can be used alone or in combination with one another. The foregoing detailed description has described only a few of the many possible implementations of the present invention. For this reason, this detailed description is intended by way of illustration, and not by way of limitation.

## Claims

1. An apparatus (100, 102) for testing an incrementally updated map database (130), the apparatus (100, 102) comprising a memory (201, 301) and a controller (200, 300),
the memory (201, 301) configured to:
store a table populated with one or more first map tiles associated with a list of recompiled objects derived from an update package (104) for updating the map database (130), wherein the one or more first map tiles include at least one first map tile geographically adjacent to at least one second map tile of one or more second map tiles, the one or more second map tiles not included in the table populated with the one or more first map tiles;
store different respective threshold values for different types of error associated with the update package (104); and
store a test script (103) including a consistency check algorithm for the one or more first map tiles, wherein the test script (103) is generated from the list of recompiled objects, and wherein the consistency check algorithm determines whether references between each of the recompiled objects within the at least one first map tile and the at least one geographically adjacent second map tile are valid,
the controller (200, 300) configured to:
execute (S107) the test script (103) on the map database (130) to generate return values indicating the numbers of each type of error in the references; and
finalize (S113) the update package (104) to the map database (130) only if the numbers of each type of error indicated by the return values are below the different respective threshold values.

2. The apparatus (102) of claim 1, wherein the controller is a map developer controller (300) configured to generate the update package (104) associated with the one or more first map tiles.

3. The apparatus (100) of claim 1, wherein the controller is a navigation device controller (200) configured to derive the one or more first map tiles from the update package (104) received from a map developer (102).

4. The apparatus (100, 102) of claim 1, wherein the test script (103) includes a test command for each of the one or more first map tiles.

5. The apparatus (100, 102) of claim 1, wherein the consistency check algorithm is configured to determine whether references in the map database (130) to the at least one first map tile and from the at least one first map tile are valid.

6. The apparatus (100, 102) of claim 1, wherein the at least one first map tile includes a tile identification value and tile data including nodes and segments.

7. The apparatus (100, 102) of claim 1, wherein the test script (103) comprises structured query language.

8. The apparatus (100, 102) of claim 1, wherein the different types of error associated with the update package (104) comprise harmless, non-critical and critical errors.

9. The apparatus (100, 102) of claim 8, wherein the number of critical errors defined by the respective threshold value is 1.

10. The apparatus (100, 102) of claim 1, wherein the numbers of each type of error defined by the different respective threshold values are specifiable by a user of the apparatus (100, 102).

11. The apparatus (100, 102) of claim 1, wherein the list of recompiled objects comprises one or more of segments, links, nodes, edges, faces and names associated with the one or more first map tiles.

12. A method for testing an incrementally updated map database (130), the method comprising:
storing a table populated with one or more first map tiles associated with a list of recompiled objects derived from an update package (104) for updating the map database (130), wherein the one or more first map tiles include at least one first map tile that is geographically adjacent to at least one second map tile of one or more second map tiles, the one or more second map tiles not included in the table populated with the one or more first map tiles;
storing different respective threshold values for different types of error associated with the update package (104);
storing a test script (103) including a consistency check algorithm for the one or more first map tiles, wherein the test script (103) is generated from the list of recompiled objects, and wherein the consistency check algorithm determines whether references between each of the recompiled objects within the at least one first map tile and the at least one geographically adjacent second map tile are valid;
executing (S107) the test script (103) on the map database (130) to generate return values indicating the numbers of each type of error in the references; and
finalizing (S113) the update package (104) to the map database (130) only if the numbers of each type of error indicated by the return values are below the different respective threshold values.

13. A non-transitory computer readable medium (201, 301) storing a computer program configured to perform a method according to claim 12.

## Patentansprüche

1. Vorrichtung (100, 102) zum Prüfen einer inkrementell aktualisierten Kartendatenbank (130), wobei die Vorrichtung (100, 102) einen Speicher (201, 301) und eine Steuereinrichtung (200, 300) umfasst,
wobei der Speicher (201, 301) konfiguriert ist zum:
Speichern einer Tabelle, die mit einer oder mehreren ersten Kartenkacheln, verknüpft mit einer Liste aus von einem Updatepaket (104) zum Aktualisieren der Kartendatenbank (130) abgeleiteten neu kompilierten Objekten, ausgefüllt ist, wobei die eine oder die mehreren ersten Kartenkacheln wenigstens eine erste Kartenkachel enthalten, die sich geographisch neben wenigstens einer zweiten Kartenkachel von einer oder mehreren zweiten Kartenkacheln befindet, wobei die eine oder die mehreren zweiten Kartenkacheln nicht in der mit der einen oder den mehreren ersten Kartenkacheln ausgefüllten Tabelle enthalten sind;
Speichern verschiedener entsprechender Schwellenwerte für verschiedene mit dem Updatepaket (104) verknüpfte Fehlerarten; und
Speichern eines Testskripts (103), das einen Konsistenzprüfungsalgorithmus für die eine oder die mehreren ersten Kartenkacheln enthält, wobei das Testskript (103) aus der Liste aus neu kompilierten Objekten erzeugt ist und wobei der Konsistenzprüfungsalgorithmus bestimmt, ob Referenzen zwischen jedem der neu kompilierten Objekte innerhalb der wenigstens einen ersten Kartenkachel und der wenigstens einen geographisch benachbarten zweiten Kartenkachel gültig sind,
die Steuereinrichtung (200, 300) konfiguriert ist zum:
Ausführen (S107) des Testskripts (103) auf der Kartendatenbank (130) zum Erzeugen von Rückgabewerten, die die Anzahlen jedes Fehlertyps in den Referenzen anzeigen; und
Finalisieren (S113) des Updatepakets (104) für die Kartendatenbank (130) nur, wenn die Anzahlen jeder Fehlerart, die durch die Rückgabewerte angezeigt werden, unter den verschiedenen entsprechenden Schwellenwerten liegen.

2. Vorrichtung (102) nach Anspruch 1, wobei die Steuereinrichtung eine Kartenentwickler-Steuereinrichtung (300) ist, die konfiguriert ist, das mit der einen oder den mehreren ersten Kartenkacheln verknüpfte Updatepaket (104) zu erzeugen.

3. Vorrichtung (100) nach Anspruch 1, wobei die Steuereinrichtung eine Navigationsgerät-Steuereinrichtung (200) ist, die konfiguriert ist, die eine oder die mehreren ersten Kartenkacheln von dem von einem Kartenentwickler (102) empfangenen Updatepaket (104) abzuleiten.

4. Vorrichtung (100, 102) nach Anspruch 1, wobei das Testskript (103) einen Testbefehl für jede der einen oder der mehreren ersten Kartenkacheln enthält.

5. Vorrichtung (100, 102) nach Anspruch 1, wobei der Konsistenzprüfungsalgorithmus konfiguriert ist, zu bestimmen, ob Referenzen in der Kartendatenbank (130) auf die wenigstens eine erste Kartenkachel und von der wenigstens einen ersten Kartenkachel gültig sind.

6. Vorrichtung (100, 102) nach Anspruch 1, wobei die wenigstens eine erste Kartenkachel einen Kachelidentifikationswert und Kacheldaten, die Knoten und Segmente enthalten, enthält.

7. Vorrichtung (100, 102) nach Anspruch 1, wobei das Testskript (103) strukturierte Abfragesprache umfasst.

8. Vorrichtung (100, 102) nach Anspruch 1, wobei die verschiedenen mit dem Updatepaket (104) verknüpften Fehlerarten harmlose, nicht kritische und kritische Fehler umfassen.

9. Vorrichtung (100, 102) nach Anspruch 8, wobei die Anzahl von durch den entsprechenden Schwellenwert definierten kritischen Fehlern 1 beträgt.

10. Vorrichtung (100, 102) nach Anspruch 1, wobei die Anzahlen jeder durch die verschiedenen entsprechenden Schwellenwerte definierten Fehlerart von einem Benutzer der Vorrichtung (100, 102) festgelegt werden können.

11. Vorrichtung (100, 102) nach Anspruch 1, wobei die Liste aus neu kompilierten Objekten ein/eine/einen oder mehrere Segmente, Verknüpfungen, Knoten, Kanten, Gesichter und/oder Namen, die mit der einen oder den mehreren ersten Kartenkacheln verknüpft sind, umfasst.

12. Verfahren zum Prüfen einer inkrementell aktualisierten Kartendatenbank (130), wobei das Verfahren Folgendes umfasst:
Speichern einer Tabelle, die mit einer oder mehreren ersten Kartenkacheln, verknüpft mit einer Liste aus von einem Updatepaket (104) zum Aktualisieren der Kartendatenbank (130) abgeleiteten neu kompilierten Objekten, ausgefüllt ist, wobei die eine oder die mehreren ersten Kartenkacheln wenigstens eine erste Kartenkachel enthalten, die sich geographisch neben wenigstens einer zweiten Kartenkachel von einer oder mehreren zweiten Kartenkacheln befindet, wobei die eine oder die mehreren zweiten Kartenkacheln nicht in der mit der einen oder den mehreren ersten Kartenkacheln ausgefüllten Tabelle enthalten sind;
Speichern verschiedener entsprechender Schwellenwerte für verschiedene mit dem Updatepaket (104) verknüpfte Fehlerarten;
Speichern eines Testskripts (103), enthaltend einen Konsistenzprüfungsalgorithmus für die eine oder die mehreren ersten Kartenkacheln, wobei das Testskript (103) aus der Liste von neu kompilierten Objekten erzeugt ist und wobei der Konsistenzprüfungsalgorithmus bestimmt, ob Referenzen zwischen jedem der neu kompilierten Objekte innerhalb der wenigstens einen ersten Kartenkachel und der wenigstens einen geographisch benachbarten zweiten Kartenkachel gültig sind;
Ausführen (S107) des Testskripts (103) auf der Kartendatenbank (130) zum Erzeugen von Rückgabewerten, die die Anzahlen jedes Fehlertyps in den Referenzen anzeigen; und
Finalisieren (S113) des Updatepakets (104) für die Kartendatenbank (130) nur, wenn die Anzahlen jeder Fehlerart, die durch die Rückgabewerte angezeigt werden, unter den jeweiligen Schwellenwerten liegen.

13. Nicht flüchtiges computerlesbares Medium (201, 301), das ein zum Ausführen eines Verfahrens nach Anspruch 12 konfiguriertes Computerprogramm speichert.

## Revendications

1. Appareil (100, 102) permettant de mettre à l'essai une base de données cartographiques mise à jour par incrément (130), l'appareil (100, 102) comprenant une mémoire (201, 301) et une unité de commande (200, 300),
la mémoire (201, 301) étant configurée pour :
mémoriser une table peuplée d'une ou plusieurs premières tuiles de carte associées à une liste d'objets recompilés dérivés d'un progiciel de mise à jour (104) permettant de mettre à jour la base de données cartographiques (130), les une ou plusieurs premières tuiles de carte incluant au moins une première tuile de carte géographiquement adjacente à au moins une seconde tuile de carte d'une ou plusieurs secondes tuiles de carte, les une ou plusieurs secondes tuiles de carte n'étant pas incluses dans la table peuplée des une ou plusieurs premières tuiles de carte ;
mémoriser différentes valeurs seuils respectives pour différents types d'erreur associés au progiciel de mise à jour (104) ; et
mémoriser un script d'essai (103) incluant un algorithme de vérification de cohérence pour les une ou plusieurs premières tuiles de carte, le script d'essai (103) étant généré à partir de la liste d'objets recompilés, et l'algorithme de vérification de cohérence déterminant si des références entre chacun des objets recompilés au sein de la au moins une première tuile de carte et la au moins une seconde tuile de carte géographiquement adjacente sont valides,
l'unité de commande (200, 300) étant configurée pour :
exécuter (S107) le script d'essai (103) sur la base de données cartographiques (130) pour générer des valeurs de retour indiquant les nombres de chaque type d'erreur dans les références ; et
finaliser (S113) le progiciel de mise à jour (104) sur la base de données cartographiques (130) uniquement si les nombres de chaque type d'erreur indiqués par les valeurs de retour sont en dessous des différentes valeurs seuils respectives.

2. Appareil (102) selon la revendication 1, dans lequel l'unité de commande est une unité de commande de développeur de carte (300) configurée pour générer le progiciel de mise à jour (104) associé aux une ou plusieurs premières tuiles de carte.

3. Appareil (100) selon la revendication 1, dans lequel l'unité de commande est une unité de commande de dispositif de navigation (200) configurée pour dériver les une ou plusieurs premières tuiles de carte du progiciel de mise à jour (104) reçu depuis un développeur de carte (102).

4. Appareil (100, 102) selon la revendication 1, dans lequel le script d'essai (103) inclut un ordre d'essai pour chacune des une ou plusieurs premières tuiles de carte.

5. Appareil (100, 102) selon la revendication 1, dans lequel l'algorithme de vérification de cohérence est configuré pour déterminer si des références dans la base de données cartographiques (130) à la au moins une première tuile de carte et depuis la au moins une première tuile de carte sont valides.

6. Appareil (100, 102) selon la revendication 1, dans lequel la au moins une première tuile de carte inclut une valeur d'identification de tuile et des données de tuile incluant des noeuds et des segments.

7. Appareil (100, 102) selon la revendication 1, dans lequel le script d'essai (103) comprend un langage de requête structuré.

8. Appareil (100, 102) selon la revendication 1, dans lequel les différents types d'erreur associés au progiciel de mise à jour (104) comprennent des erreurs inoffensives, non critiques et critiques.

9. Appareil (100, 102) selon la revendication 8, dans lequel le nombre d'erreurs critiques défini par la valeur seuil respective est de 1.

10. Appareil (100, 102) selon la revendication 1, dans lequel les nombres de chaque type d'erreur définis par les différentes valeurs seuils respectives peuvent être spécifiés par un utilisateur de l'appareil (100, 102).

11. Appareil (100, 102) selon la revendication 1, dans lequel la liste d'objets recompilés comprend un ou plusieurs segments, liens, noeuds, bords, visages et noms associés aux une ou plusieurs premières tuiles de carte.

12. Procédé de mise à l'essai d'une base de données cartographiques mise à jour par incrément (130), le procédé comprenant :
la mémorisation d'une table peuplée d'une ou plusieurs premières tuiles de carte associées à une liste d'objets recompilés dérivés d'un progiciel de mise à jour (104) permettant de mettre à jour la base de données cartographiques (130), les une ou plusieurs premières tuiles de carte incluant au moins une première tuile de carte qui est géographiquement adjacente à la au moins une seconde tuile de carte d'une ou plusieurs secondes tuiles de carte, les une ou plusieurs secondes tuiles de carte n'étant pas incluses dans la table peuplée des une ou plusieurs premières tuiles de carte ;
la mémorisation de différentes valeurs seuils respectives pour différents types d'erreur associés au progiciel de mise à jour (104) ;
la mémorisation d'un script d'essai (103) incluant un algorithme de vérification de cohérence pour les une ou plusieurs premières tuiles de carte, le script d'essai (103) étant généré à partir de la liste d'objets recompilés, et l'algorithme de vérification de cohérence déterminant si des références entre chacun des objets recompilés au sein de la au moins une première tuile de carte et la au moins une seconde tuile de carte géographiquement adjacente sont valides ;
l'exécution (S107) du script d'essai (103) sur la base de données cartographiques (130) pour générer des valeurs de retour indiquant les nombres de chaque type d'erreur dans les références ; et
la finalisation (S113) du progiciel de mise à jour (104) sur la base de données cartographiques (130) uniquement si les nombres de chaque type d'erreur indiqués par les valeurs de retour sont en dessous des différentes valeurs seuils respectives.

13. Support lisible par ordinateur non transitoire (201, 301) mémorisant un programme d'ordinateur configuré pour réaliser un procédé selon la revendication 12.
